# DEMANDE DE BREVET EUROPEEN

(11) **EP 4 431 320 A1**
(43) Date de publication de la demande: **18.09.2024**
(21) Numéro de dépôt: 24162049.1
(22) Date de dépôt: 07.03.2024
(51) Int. Cl.: B60H 1/22, B60H 1/32

(54) **SYSTÈME THERMIQUE POUR VÉHICULE AUTOMOBILE**

(30) Priorité: 14.03.2023 FR 2302369
(71) Demandeur: Renault s.a.s, 92100 Boulogne Billancourt (FR)
(72) Inventeur: L'HUILLIER, Jean-Marie, 78280 GUYANCOURT (FR)

(57) **Abrégé**

Procédé de gestion thermique d'un véhicule automobile (100) équipé de conduits agencés pour permettre une circulation d'un fluide caloporteur dans une boucle reliant successivement un élément de chauffage électrique (13), un condenseur (111) d'une pompe à chaleur (11) puis un aérotherme (12), le procédé de gestion thermique comprenant :
- une première étape (E1) de réception d'une première température (T1) souhaitée dans un habitacle (2) du véhicule automobile (100),
- une deuxième étape (E2) de détermination d'une deuxième température courante (T2) de l'habitacle (2) du véhicule automobile (100),
- une troisième étape (E3) de transmission à la pompe à chaleur (11) d'une première consigne (C1) de température du fluide caloporteur et de transmission à l'élément de chauffage électrique (13) d'une deuxième consigne (C2) de température du fluide caloporteur, la première et la deuxième consigne étant calculées en fonction de la première température (T1) et de la deuxième température (T2),
une différence entre la première consigne (C1) et la deuxième consigne (C2) étant strictement positive.

## Description

L'invention concerne un procédé de gestion thermique d'un véhicule automobile. L'invention concerne également un système thermique pour véhicule automobile. L'invention concerne de plus un véhicule automobile équipé d'un système thermique.

Les véhicules automobiles et particulièrement les véhicules électriques, peuvent être équipés d'une pompe à chaleur, qui présente un excellent rendement énergétique. Toutefois, en dessous d'un seuil de température, par exemple en dessous de -10°C, la puissance fournie par la pompe à chaleur seule est insuffisante pour chauffer l'habitacle.

Un chauffage additionnel est alors nécessaire, généralement mis en oeuvre par un élément de chauffage électrique disposé sur le circuit de fluide caloporteur en amont ou en aval de la pompe à chaleur. Le rendement de l'élément de chauffage électrique étant bien moins avantageux que celui de la pompe à chaleur, son utilisation est régulée, notamment son utilisation est préférentiellement stoppée au profit de la pompe à chaleur, dès que la température du fluide caloporteur souhaitée est atteinte.

Dans le cas d'une pompe à chaleur indirecte, c'est-à-dire lorsque le condenseur de la pompe à chaleur échange la chaleur produite avec le fluide caloporteur d'un circuit de chauffage, le pilotage simultané de l'élément électrique et de la pompe à chaleur est complexe car ces deux systèmes sont disposés sur une même boucle de circulation de fluide caloporteur, ce qui crée une interdépendance entre les deux systèmes et conduit à un risque très important d'instabilité de régulation des deux systèmes.

Le but de l'invention est de fournir un procédé de gestion thermique et un système thermique remédiant aux inconvénients ci-dessus et améliorant les procédés et systèmes connus de l'art antérieur. En particulier, l'invention permet de réaliser un procédé de gestion thermique qui soit fiable et efficace, qui régule efficacement l'utilisation de l'élément électrique tout en supprimant le risque d'instabilité de régulation des deux systèmes de chauffage.

A cet effet, l'invention porte sur un procédé de gestion thermique d'un véhicule automobile équipé
- d'un élément de chauffage électrique,
- d'un aérotherme,
- d'une pompe à chaleur comprenant un condenseur,
- et d'un premier ensemble de conduits agencés de sorte à permettre une circulation d'un premier fluide caloporteur dans une boucle de conduits reliant successivement l'élément de chauffage électrique, le condenseur puis l'aérotherme,

le procédé de gestion thermique comprenant :
   - une première étape de réception d'une première température souhaitée dans un habitacle du véhicule automobile,
   - une deuxième étape de détermination d'une deuxième température courante de l'habitacle du véhicule automobile,
   - une troisième étape de transmission à la pompe à chaleur d'une première consigne de température du premier fluide caloporteur et de transmission à l'élément de chauffage électrique d'une deuxième consigne de température du premier fluide caloporteur, la première et la deuxième consigne étant calculées en fonction de la première température et de la deuxième température,
une différence entre la première consigne et la deuxième consigne étant strictement positive, notamment strictement supérieure à un degré Celsius, voire strictement supérieure à deux degrés Celsius, voire strictement supérieure à trois degrés Celsius.

Dans un mode de réalisation, la différence entre la première consigne et la deuxième consigne est égale à un seuil positif constant, par exemple 3 degrés Celsius.

Dans un mode de réalisation, la deuxième étape comprend une détermination de la deuxième température
- en fonction d'une troisième température d'un fluide caloporteur circulant en entrée de l'aérotherme mesurée par un premier capteur de température, et/ou
- en fonction d'une quatrième température d'un air circulant en entrée de l'aérotherme mesurée par un deuxième capteur de température, et/ou
- en fonction d'un débit d'un air traversant l'aérotherme, et/ou
- en fonction de caractéristiques thermiques de l'aérotherme.

Dans un mode de réalisation, le calcul de la première consigne de température du premier fluide caloporteur comprend :
- un calcul d'un premier écart entre la première température et la deuxième température, puis
- une mise en oeuvre d'un régulateur de type proportionnel, intégral, dérivé, déterminant une première consigne de température du premier fluide caloporteur annulant le premier écart.

Dans un mode de réalisation, la pompe à chaleur comprend un deuxième ensemble de conduits agencés de sorte à permettre une circulation d'un deuxième fluide caloporteur dans le condenseur, le procédé comprend une quatrième étape de calcul d'un débit du deuxième fluide caloporteur dans le condenseur, comprenant :
- un calcul d'un deuxième écart entre la première consigne de température du premier fluide caloporteur et une température courante du premier fluide caloporteur, puis
- une mise en oeuvre d'un régulateur de type proportionnel, intégral, dérivé déterminant une consigne de débit du deuxième fluide caloporteur annulant le deuxième écart.

Dans un mode de réalisation, la quatrième étape comprend en outre un calcul d'une puissance électrique nécessaire pour annuler un écart de température entre la deuxième consigne et une température courante du premier fluide caloporteur, comprenant
- un calcul d'un troisième écart entre la deuxième consigne de température du premier fluide caloporteur et une température courante du premier fluide caloporteur, puis
- une mise en oeuvre d'un régulateur de type proportionnel, intégral, dérivé déterminant une consigne de puissance de l'élément chauffant électrique annulant le troisième écart.

L'invention porte en outre sur un système de gestion thermique comprenant des éléments matériels et/ou logiciels mettant en oeuvre le procédé selon l'invention, notamment des éléments matériels et/ou logiciels conçus pour mettre en oeuvre un procédé selon l'invention, et/ou le dispositif comprenant des moyens de mettre en oeuvre le procédé selon l'invention.

Dans un mode de réalisation du système de gestion thermique, l'élément de chauffage électrique est une résistance en céramique dite à coefficient de température positif.

L'invention porte en outre sur un véhicule automobile équipé d'un système thermique selon l'invention.
La figure 1 représente schématiquement un véhicule automobile équipé d'un système thermique selon un mode de réalisation de l'invention.
La figure 2 est un ordinogramme représentant un mode d'exécution d'un procédé de gestion thermique selon l'invention.
La figure 3 illustre un mode de réalisation d'un calcul d'une puissance appliquée par un élément de chauffage électrique du système de gestion thermique.
La figure 4 illustre une première mise en oeuvre d'un système thermique selon l'invention lorsqu'une température d'un air extérieur est de 0°C.
La figure 5 illustre une deuxième mise en oeuvre d'un système thermique selon l'invention lorsqu'une température d'un air extérieur est de -15°C.

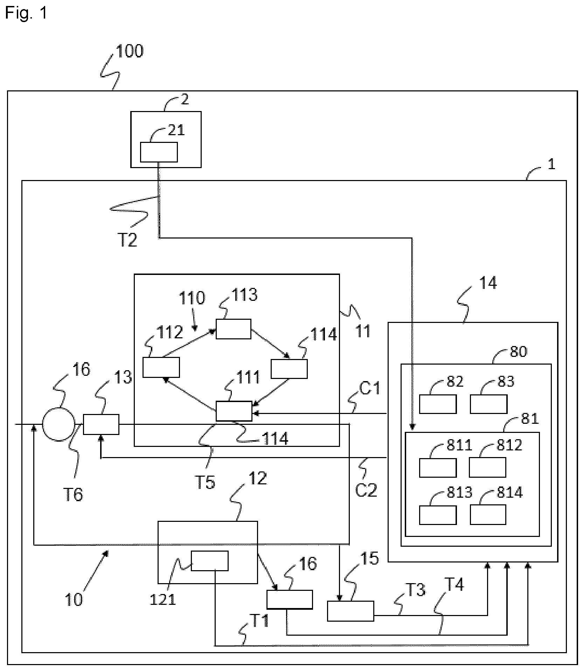

Un mode de réalisation d'un véhicule automobile 100 selon l'invention est décrit ci-après en référence à la figure 1. Le véhicule automobile 100 est un véhicule automobile de toute type, notamment un véhicule de tourisme ou un véhicule utilitaire.

Dans un mode de réalisation plus spécifiquement décrit dans ce document, le véhicule automobile 100 est un véhicule électrique, c'est-à-dire un véhicule comprenant un moteur électrique configuré pour entraîner des roues motrices du véhicule. Il comprend un système thermique 1 destiné notamment au chauffage d'un habitacle 2 du véhicule.

Le système thermique 1 comprend un premier ensemble 10 de conduits dans lequel circule un premier fluide caloporteur. Les conduits du premier ensemble 10 sont reliés à une pompe 16 qui crée une circulation de fluide dans les conduits du premier ensemble 10. Le circuit thermique 1 peut également comprendre un bocal de dégazage.

Le système thermique 1 comprend notamment un aérotherme 12, également nommé radiateur de chauffage, disposé dans l'habitacle 2.

Au moins un conduit du premier ensemble de conduits 10 traverse l'aérotherme 12. Avantageusement, le système thermique 1 comprend un moyen de réglage 121 d'une température T1 souhaitée dans l'habitacle par un usager du véhicule automobile 100. Avantageusement, la température T1 correspond à une température globale de l'habitacle, c'est-à-dire une température moyenne d'un air de l'habitacle.

En complément, la température T1 souhaitée dans l'habitacle pourrait être établie automatiquement à une valeur par défaut, lorsqu'aucun usager n'a défini de température souhaitée.

Le premier fluide caloporteur du système thermique 1 est dirigé vers l'aérotherme 12, entrainant un réchauffement d'un air situé à proximité de l'au moins un conduit traversant l'aérotherme 12. Avantageusement, cet air chauffé sera alors projeté, notamment sous l'action d'un système de ventilation, vers différentes bouches d'aérateurs disposées dans l'habitacle 2. En d'autres termes, la chaleur générée par le système thermique 1 est transmise à l'habitacle 2 par l'intermédiaire d'un air traversant l'aérotherme 12, à proximité du premier fluide caloporteur du système thermique 1.

Un capteur de température 16 est avantageusement disposé sur le premier ensemble de conduits 10, permettant de mesurer la température du premier fluide caloporteur. Dans un mode de réalisation préférentiel, le capteur 16 est disposé de sorte à mesurer une température T3 d'un fluide caloporteur circulant en entrée de l'aérotherme 12.

Le système thermique 1 comprend par ailleurs une pompe à chaleur 11, également nommé « système de pompe à chaleur » dans la suite du document, comprenant un deuxième ensemble de conduits 110, le deuxième ensemble de conduits mettant en oeuvre une circulation d'un deuxième fluide caloporteur, également appelé « fluide réfrigérant » dans la suite du document.

Le premier fluide caloporteur circulant dans le premier ensemble de conduits 10 du système thermique 1 est lui-même réchauffé par le deuxième fluide caloporteur circulant dans le deuxième ensemble de conduits 110 de la pompe à chaleur 11 par l'intermédiaire d'un échangeur appelé condenseur 111. La pompe à chaleur est dite indirecte car le condenseur 111 n'est pas placé directement dans le flux d'air de l'habitacle.

Le premier fluide caloporteur peut être, par exemple, de l'eau, notamment de l'eau glycolée.

Dans un mode de réalisation avantageux, le deuxième fluide caloporteur est un fluide réfrigérant, par exemple de type R1234yf, R134a, R290, R744 ou tout autre fluide permettant le fonctionnement d'une pompe à chaleur

Dans un mode de réalisation, le deuxième ensemble de conduits 110 de la pompe à chaleur 11 crée une circulation en boucle du deuxième fluide caloporteur, reliant successivement
- l'échangeur fonctionnant en condenseur 111, assurant le transfert de chaleur du deuxième fluide caloporteur vers le premier fluide caloporteur,
- un détendeur 112,
- un échangeur fonctionnant en évaporateur 113, assurant le transfert de chaleur d'un air extérieur ou de toute autre source de chaleur, vers le deuxième fluide caloporteur,
- un compresseur 114, chargé de mettre en circulation et de comprimer sous forme gazeuse le deuxième fluide caloporteur.

Dans le mode de réalisation décrit, un élément de chauffage électrique 13 est disposé sur le premier ensemble de conduits, ou à proximité du premier ensemble de conduits. De plus, les conduits du premier ensemble 10 sont agencés de sorte à permettre une circulation du premier fluide caloporteur dans une boucle de conduits reliant successivement la pompe 16, l'élément de chauffage électrique 13, le condenseur 111 puis l'aérotherme 12.

Dans un mode de réalisation, l'élément de chauffage électrique 13 est une résistance en céramique dite à coefficient de température positif (CTP).

Le système comprend en outre un superviseur 14 qui coordonne le fonctionnement de la pompe à chaleur 11 (notamment via un réglage de la puissance du condenseur 111) et le fonctionnement de l'élément chauffant électrique 13.

Dans un mode de réalisation avantageux, le système thermique 1, et plus spécifiquement le superviseur 14, comprend en outre les moyens de mise en oeuvre d'un procédé de gestion thermique selon l'invention. Notamment, le superviseur 14 comprend une unité de traitement 80 comprenant un microprocesseur 81, une mémoire 82 et des interfaces de communication 83.

Le système thermique 1 et particulièrement le microprocesseur 81, comprend principalement les modules suivants qui coopèrent entre eux :
- un module 811 de réception d'une première température souhaitée dans un habitacle du véhicule automobile, ce module pouvant coopérer avec le moyen de réglage 121 disposé sur l'aérotherme 12,
- un module 812 de détermination d'une deuxième température courante de l'habitacle du véhicule automobile, ce module pouvant coopérer avec un capteur de température 21 disposé dans l'habitacle 2, ou un capteur de température 16 disposé à un point d'entrée du fluide caloporteur dans l'aérotherme 12,
- un module 813 de transmission au condenseur d'une première consigne de température du premier fluide caloporteur, et de transmission à l'élément de chauffage électrique d'une deuxième consigne de température du premier fluide caloporteur, ce module pouvant coopérer avec le condenseur 111 et l'élément de chauffage électrique 13, et
- un module 814 d'application de la première consigne de température C1 par le condenseur 111 et d'application de la deuxième consigne de température C2 par l'élément de chauffage électrique 13, ce module coopérant avec le condenseur 111 et l'élément de chauffage électrique 13.

Le véhicule automobile 100, en particulier le système thermique 1, comprend de préférence tous les éléments matériels et/ou logiciels configurés de sorte à mettre en oeuvre le procédé défini dans l'objet de l'invention ou le procédé décrit plus bas.

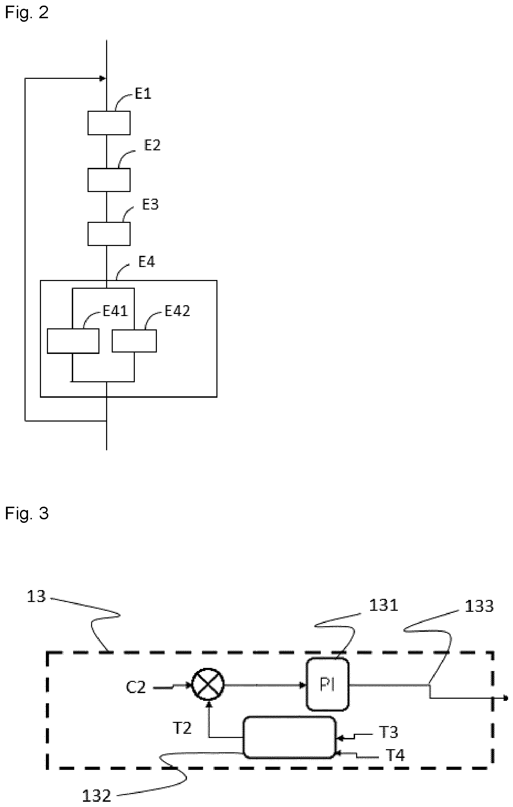

En référence à la figure 2, on décrit un procédé de gestion thermique comprenant une itération sur quatre étapes E1 à E4 qui s'exécutent successivement. Dans un mode de réalisation, l'itération sur les quatre étapes E1 à E4 s'effectue toutes les secondes, ou toutes les deux secondes, voire toutes les cinq secondes.

Le procédé de gestion thermique comprend notamment :
- une première étape E1 de réception d'une première température T1 souhaitée dans un habitacle 2 du véhicule automobile 100,
- une deuxième étape E2 de détermination d'une deuxième température courante (T2) de l'habitacle (2) du véhicule automobile (100),
- une troisième étape E3 de transmission à la pompe à chaleur 11 d'une première consigne C1 de température du premier fluide caloporteur et de transmission à l'élément de chauffage électrique 13 d'une deuxième consigne C2 de température du premier fluide caloporteur, la première et la deuxième consigne étant calculées en fonction de la première température T1 et de la deuxième température T2, et
- une quatrième étape E4 comprenant une sous-étape E41 d'application de la première consigne de température C1 par la pompe à chaleur 11 (via le condenseur 111) et une sous étape E42 d'application de la deuxième consigne de température C2 par l'élément de chauffage électrique 13.

Dans la première étape E1, on reçoit une première consigne de température T1 correspondant à une température souhaitée d'un air de l'habitacle 2. Dans un mode de réalisation, la température T1 peut être issue d'un moyen de réglage 121 d'une commande de climatisation disposée dans l'habitacle permettant à un usager du véhicule automobile 100 de régler la température qu'il souhaite dans l'habitacle 2. Alternativement, la température T1 peut être issue d'un système gérant la personnalisation des réglages du véhicule automobile en fonction de préférences d'un usager courant.

Dans la deuxième étape E2, on détermine une deuxième température courante T2 de l'habitacle 2 du véhicule automobile 100. Dans un mode de réalisation, un capteur de température 21 peut être disposé dans l'habitacle 2 pour déterminer la deuxième température T2. Dans un mode de réalisation, la température T2 est une température d'un air soufflé dans l'habitacle 2.

Alternativement, la détermination de la deuxième température T2 peut s'effectuer en fonction d'une troisième température T3 d'un fluide caloporteur circulant en entrée de l'aérotherme 12, la température T3 étant mesurée par un premier capteur de température 15 disposé à un point d'entrée du fluide caloporteur dans l'aérotherme 12.

En complément ou alternativement, la détermination de la deuxième température T2 peut prendre en compte une quatrième température T4 d'un air circulant en entrée de l'aérotherme 12, la quatrième température T4 étant mesurée par un deuxième capteur de température 16.

En complément ou alternativement, la détermination de la deuxième température T2 peut prendre en compte un débit d'air circulant dans l'aérotherme 12.

Avantageusement, la détermination de la deuxième température T2 peut prendre en compte un modèle 132 de caractéristiques thermiques de l'aérotherme 12. En effet la température T2 peut être calculée en fonction du débit d'air, du débit et de la température du premier fluide caloporteur qui le traverse et d'un abaque (une cartographie) représentant la courbe d'efficacité de l'aérotherme 12.

Le procédé de gestion thermique comprend ensuite une troisième étape E3, qui comprend :
- une transmission d'une première consigne de température C1 au condenseur 111, et
- une transmission d'une deuxième consigne de température C2 à l'élément de chauffage électrique 13,
la première et la deuxième consigne C1, C2 étant calculées en fonction de la première température T1 et de la deuxième température T2.

De plus, une différence entre la première consigne C1 et la deuxième consigne C2 est strictement positive, notamment strictement supérieure à un degré, voire strictement supérieure à deux degrés, voire strictement supérieure à trois degrés. Dans un mode de réalisation, la différence entre la première consigne C1 et la deuxième consigne C2 est égale à un seuil positif constant S1, le seuil S1 étant par exemple égal à 3 degrés.

Ainsi, dans un mode de réalisation préférentiel, on détermine la première consigne C1 en fonction de la première température T1 et de la deuxième température T2.

Notamment, on calcule la première consigne C1 correspondant à la température à laquelle il faudrait amener le premier fluide caloporteur pour annuler l'écart calculé entre la première et la deuxième température.

Avantageusement, la détermination de la première consigne C1 comprend une mise en oeuvre d'un régulateur de type proportionnel, intégral, dérivé, nommé régulateur PID dans la suite du document.

Dans un mode de réalisation préférentiel, le calcul de la deuxième consigne C2, destinée à l'élément de chauffage électrique 13, s'effectue en appliquant une réduction (ou offset) de valeur S1 à la première consigne C1, la valeur S1 étant strictement positive. En d'autres termes, la consigne C2 est égale à la différence entre la consigne C1 et l'offset S1.

Dans un mode de réalisation, l'offset S1 peut être égal à au moins un degré Celsius, par exemple égal à un ou deux ou trois degrés Celsius.

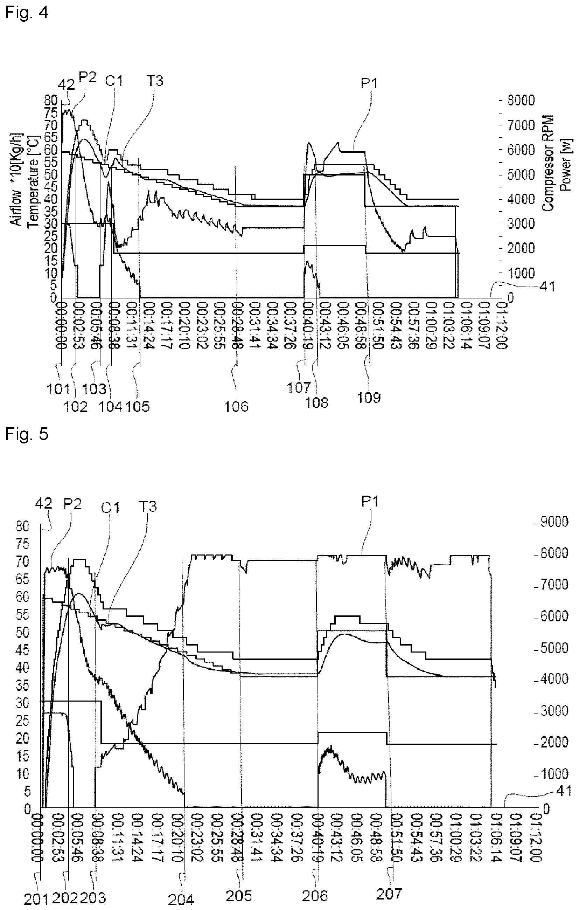

Dans un mode de réalisation plus particulièrement illustré par les figures 4 et 5, la valeur de l'offset S1 est constante, par exemple égale à trois degrés. Ainsi, dans la troisième étape on détermine une première consigne C1 destinée à être transmise au condenseur 111 de la pompe à chaleur 11, et on calcule une deuxième consigne C2 destinée à être transmise à l'élément de chauffage électrique 13, la consigne C2 étant égale à la consigne C1 moins 3 degrés Celsius.

Dans certaines situations, la puissance de la pompe à chaleur n'est pas suffisante pour chauffer l'habitacle en régime permanent à la température T1 souhaitée par un usager (voir le cas illustré par la figure 5, entre les instants 206 et 207). Dans ce cas, l'élément de chauffage électrique 13 peut être en mesure d'apporter le complément de chaleur nécessaire pour que l'habitacle atteigne et se maintienne à la température T1. Or la consigne C2 transmise à l'élément de chauffage électrique 13 est calculée pour être inférieure de S1 degrés à la température réellement requise pour atteindre la température T1 dans l'habitacle. Avantageusement, lorsque cette situation se produit, dans l'étape E3 on détecte un maintien de la température courante de l'habitacle T2 en dessous de la température T1 requise par l'usager. Dans ce cas, on augmente la température T1 d'un nombre donné de degrés afin de permettre à l'élément de chauffage électrique 13 d'apporter plus de chaleur, de sorte à mettre en oeuvre la température T1 dans l'habitacle 2.

Le procédé de gestion thermique comprend ensuite une quatrième étape E4, qui comprend :
- une sous-étape E41 d'application de la première consigne C1 par le compresseur 111, et
- une sous-étape E42 d'application de la deuxième consigne C2 par l'élément chauffant électrique 13,
la première et la deuxième sous-étape 41, 42 pouvant s'exécuter simultanément.

Dans la première sous-étape E41, sur réception de la consigne C1, le superviseur 14 détermine la quantité de chaleur à transmettre par le condenseur 111. A cet effet, le superviseur 14 peut alors mettre un oeuvre un régulateur PID afin de calculer un débit du deuxième fluide caloporteur circulant dans le condenseur 111, le débit étant calculé de sorte à annuler
- soit un écart de température entre la première consigne C1 et la température courante de l'habitacle T2 calculée ou mesurée,
- soit un écart de température entre la première consigne C1 et une cinquième température T5 correspondant à la température courante du premier fluide caloporteur circulant à proximité du condenseur 111.

La puissance P1 du condenseur est ensuite adaptée de sorte à mettre en oeuvre le débit du deuxième fluide caloporteur calculé par le régulateur PID.

En parallèle, comme cela est illustré par la figure 3, dans la deuxième sous-étape E42, sur réception de la consigne C2, l'élément de chauffage électrique 13 ou le superviseur 14 peuvent également mettre un oeuvre un régulateur PID afin de calculer une puissance électrique P2 nécessaire pour annuler
- soit un écart de température entre la deuxième consigne C2 et la température courante de l'habitacle T2 calculée ou mesurée,
- soit un écart de température entre la deuxième consigne C2 et une sixième température T6 correspondant à la température courante du premier fluide caloporteur circulant en entrée de l'élément de chauffage électrique 13.

L'élément de chauffage électrique 13 applique alors la puissance P2 calculée par le régulateur PID.

Une nouvelle itération du procédé précédemment décrit peut ensuite être exécutée.

La figure 4 illustre une mise en oeuvre de l'invention lorsque la température d'un air extérieur du véhicule est égale à 0 degrés Celsius.

L'axe des abscisses 41 représente le temps. L'axe 42 des ordonnées représente différentes grandeurs selon la courbe :
- la courbe C1 représente l'évolution temporelle d'une consigne de température du premier fluide caloporteur, la consigne C1 étant transmise par le superviseur 14 au condenseur 111,
- la courbe T3 représente l'évolution temporelle d'une température mesurée ou calculée d'un fluide caloporteur circulant en entrée de l'aérotherme 12,
- la courbe P1 représente l'évolution temporelle d'une puissance mise en oeuvre par le condenseur 111 pour annuler l'écart entre la consigne C1 et la température T3, et
- la courbe P2 représente l'évolution temporelle d'une puissance mise en oeuvre par l'élément chauffant électrique 13 pour annuler un écart entre une consigne C2 et la température T3, la consigne C2 (non représentée sur le graphe) étant égale à la consigne C1 moins 3 degrés Celsius.

A l'instant initial 101, la courbe T3 montre que la température du fluide caloporteur circulant en entrée de l'aérotherme est égale à 0°C.

De plus, à t l'instant initial 101, à partir d'une température requise dans l'habitacle, on détermine pour le condenseur une consigne C1 de température du fluide caloporteur égale à 60°C.

Dans le scénario illustré par la figure 4, l'utilisateur modifie la température souhaitée dans l'habitacle, ce qui entraine notamment des variations de la consigne C1. On observe ainsi que la consigne C1, diminue progressivement jusqu'à un instant 106 où elle atteint 37°C. La consigne C1 se stabilise alors à 37°C jusqu'à un instant 107. Puis entre l'instant 107 et un instant 109, la consigne C1 est maintenue à une valeur constante de 50°C. Puis au-delà de l'instant 109, la consigne C1 repasse à 37°C.

On compare ensuite l'évolution temporelle de la consigne C1 et de la température T3, et l'impact de cette évolution sur le fonctionnement du condenseur 111 et de l'élément de chauffage électrique 13.

Entre les instants 101 et 102, la température T3 est très inférieure à la consigne C1, le condenseur 111 et l'élément de chauffage électrique 13 sont donc tous les deux démarrés. La puissance déployée par l'élément de chauffage électrique 13 augmente très rapidement, alors que la puissance déployée par le condenseur 111 est plus faible. Grâce à la puissance fournie par l'élément de chauffage électrique 13, à l'instant 102, la température T3 est supérieure à la température de consigne C1. Un peu avant l'instant 102, la puissance de l'élément de chauffage électrique 13 commence à diminuer, jusqu'à devenir nulle à un instant 105. On relève également qu'une différence entre la consigne C1 et la température T3 est supérieure à 3°C (c'est-à-dire au seuil S1) entre les instants 103 et 104, ce qui est corrélé avec une augmentation temporaire de la puissance utilisée par l'élément de chauffage électrique 13.

Entre les instants 104 et 105, les courbes P1 et P2 se croisent. Ce croisement matérialise la montée en puissance du compresseur 111, dont la contribution devient majoritaire dans la gestion thermique du véhicule automobile 100.

Entre les instants 105 et 107, l'écart entre la consigne C1 et la température T3 est inférieur au seuil S1 (égal ici à 3 °C), donc la consigne C2 est inférieure à la température T3. L'élément de chauffage électrique 13 est donc arrêté.

Puis, entre les instants 107 et 108, lorsque la consigne C1 augmente brusquement de 37°C à 50°C, l'écart entre la consigne C1 et la température T3 est à nouveau supérieur au seuil S1 ; l'élément de chauffage électrique 13 est donc redémarré et fonctionne jusqu'à un instant 108 où l'écart entre la consigne C1 et la température T3 est à nouveau inférieur au seuil S1.

Ainsi, dans l'exemple illustré par la figure 4, l'utilisation de l'élément de chauffage électrique est relativement restreinte, puisqu'elle est réservée à des périodes transitoires de forte montée en température du liquide caloporteur. La plupart de temps, l'usage de la pompe à chaleur 11 est suffisant pour mettre en oeuvre une température souhaitée dans l'habitacle 2 par l'usager du véhicule.

La figure 5 représente les mêmes courbes que la figure 4, dans une situation où la température de l'air extérieur est égale à -15 °C.

A l'instant initial 201, la courbe T3 montre que la température du fluide caloporteur circulant en entrée de l'aérotherme est égale à 0°C.

De plus, à t l'instant initial 201; une température requise dans l'habitacle détermine pour le condenseur une consigne C1 de température du fluide caloporteur égale à 60°C.

Dans le scénario illustré par la figure 5, l'utilisateur modifie la température souhaitée dans l'habitacle, ce qui entraine notamment des variations de la consigne C1. On observe ainsi que la consigne C1, diminue progressivement jusqu'à un instant 205 où elle atteint 37°C. La consigne C1 se stabilise alors à 37°C jusqu'à un instant 206. Puis entre l'instant 206 et un instant 207, la consigne C1 est maintenue à une valeur constante de 50°C. Puis au-delà de l'instant 207, la consigne C1 repasse à 37°C.

Entre les instants 201 et 202 de démarrage, la température T3 est très inférieure à la consigne C1, le condenseur 111 et l'élément de chauffage électrique 13 sont donc tous les deux démarrés.

Entre les instants 203 l'écart entre la consigne C1 et la température T3 est inférieur au seuil S1 (égal ici à 3 °C), donc la consigne C2 est inférieure à la température T3. L'élément de chauffage électrique 13 est donc arrêté, ce qui est particulièrement visible sur la courbe P2, entre les instants 204 et 206.

Néanmoins, entre les instant 203 à 204, on observe que l'arrêt de l'élément électrique chauffant 13 est corrélé à une forte augmentation de puissance du condenseur 111, jusqu'à atteindre sa limite de puissance à 8000 tours par minute.

En particulier, entre les instants 206 et 207, lorsque la consigne C1 est augmentée de 37°C à 60°C, le condenseur ne peut pas absorber seul cette montée en puissance. L'élément chauffant électrique 13 reste alors activé entre les instants 206 et 207, puis s'arrête lorsque la consigne C1 est redescendue à 37°C.

Finalement, l'invention permet tout d'abord de résoudre les difficultés induites par l'interdépendance entre le pilotage du condenseur et le pilotage de l'élément de chauffage électrique. Notamment, grâce à l'invention, on supprime un inconfort acoustique et des fluctuations de température dans l'habitacle du véhicule.

De plus, l'invention permet d'optimiser la gestion thermique du véhicule, notamment par rapport au chauffage de l'habitacle, et ce en fonction des contraintes de température extérieure.

Le décalage appliqué à la consigne de température transmise l'élément de chauffage électrique 13 permet
- d'utiliser l'élément de chauffage électrique en tant qu'apport de puissance lorsque la mesure de température dans l'habitacle donne une valeur beaucoup plus froide que la température habitacle souhaitée par un usager,
- et d'annuler cet apport de puissance lorsque la température mesurée dans l'habitacle est proche de la consigne souhaitée.

Ainsi, l'élément de chauffage électrique 13 est utilisé essentiellement pour épauler la pompe à chaleur sur des phases de montées en température. Puis, quand la température de l'habitacle est proche de la température souhaitée par l'usager, seule la pompe à chaleur fonctionne. Autrement dit, le système thermique permet à la fois d'atteindre rapidement la température habitacle souhaitée, et d'utiliser préférentiellement le système de chauffage présentant le meilleur rendement thermique.

Par ailleurs, la puissance maximale disponible dans une pompe à chaleur décroit avec la température ambiante. Notamment, lorsque la température de l'air extérieur est inférieure à -10°C, la puissance d'une pompe à chaleur est insuffisante, et un chauffage additionnel est nécessaire. L'apport de l'élément de chauffage électrique est alors très appréciable notamment lorsque le véhicule est resté longuement en ambiance froide. Le système de gestion thermique selon l'invention permet d'utiliser un élément de chauffage électrique en parallèle avec le système de pompe à chaleur, tout en conférant la priorité au système de pompe à chaleur afin d'optimiser la consommation d'énergie du véhicule.

Ainsi, le système de gestion thermique selon l'invention permet d'augmenter l'autonomie d'un véhicule électrique.

## Revendications

1. Procédé de gestion thermique d'un véhicule automobile (100) équipé
- d'un élément de chauffage électrique (13),
- d'un aérotherme (12),
- d'une pompe à chaleur (11) comprenant un condenseur (111),
- et d'un premier ensemble (10) de conduits agencés de sorte à permettre une circulation d'un premier fluide caloporteur dans une boucle de conduits reliant successivement l'élément de chauffage électrique (13), le condenseur (111) puis l'aérotherme (12), **caractérisé en ce qu'**il comprend :
• une première étape (E1) de réception d'une première température (T1) souhaitée dans un habitacle (2) du véhicule automobile (100),
• une deuxième étape (E2) de détermination d'une deuxième température courante (T2) de l'habitacle (2) du véhicule automobile (100),
• une troisième étape (E3) de transmission à la pompe à chaleur (11) d'une première consigne (C1) de température du premier fluide caloporteur et de transmission à l'élément de chauffage électrique (13) d'une deuxième consigne (C2) de température du premier fluide caloporteur, la première et la deuxième consigne étant calculées en fonction de la première température (T1) et de la deuxième température (T2),
une différence entre la première consigne (C1) et la deuxième consigne (C2) étant strictement positive, notamment strictement supérieure à un degré Celsius, voire strictement supérieure à deux degrés Celsius, voire strictement supérieure à trois degrés Celsius.

2. Procédé de gestion thermique selon la revendication précédente, **caractérisé en ce que** la différence entre la première consigne et la deuxième consigne est égale à un seuil positif constant (S1), par exemple 3 degrés Celsius.

3. Procédé de gestion thermique selon l'une des revendications précédentes, **caractérisé en ce que** la deuxième étape (E2) comprend une détermination de la deuxième température (T2)
- en fonction d'une troisième température (T3) d'un fluide caloporteur circulant en entrée de l'aérotherme (12) mesurée par un premier capteur de température (15), et/ou
- en fonction d'une quatrième température (T4) d'un air circulant en entrée de l'aérotherme (12) mesurée par un deuxième capteur de température (16), et/ou
- en fonction d'un débit (D1) d'un air traversant l'aérotherme (12), et/ou
- en fonction de caractéristiques thermiques de l'aérotherme (12).

4. Procédé de gestion thermique selon l'une des revendications précédentes, **caractérisé en ce que** le calcul de la première consigne (C1) de température du premier fluide caloporteur comprend :
- un calcul d'un premier écart entre la première température (T1) et la deuxième température (T2), puis
- une mise en oeuvre d'un régulateur de type proportionnel, intégral, dérivé, déterminant une première consigne (C1) de température du premier fluide caloporteur annulant le premier écart.

5. Procédé de gestion thermique selon l'une des revendications précédentes, la pompe à chaleur (11) comprenant un deuxième ensemble (20) de conduits agencés de sorte à permettre une circulation d'un deuxième fluide caloporteur dans le condenseur (111), **caractérisé en ce qu'**il comprend une quatrième étape (E4) de calcul d'un débit (D2) du deuxième fluide caloporteur dans le condenseur (111), comprenant :
- un calcul d'un deuxième écart entre la première consigne (C1) de température du premier fluide caloporteur et une température courante du premier fluide caloporteur, puis
- une mise en oeuvre d'un régulateur de type proportionnel, intégral, dérivé déterminant une consigne de débit (D2) du deuxième fluide caloporteur annulant le deuxième écart.

6. Procédé de gestion thermique selon la revendication précédente, **caractérisé en ce que** la quatrième étape (E4) comprend en outre un calcul d'une puissance électrique nécessaire pour annuler un écart de température entre la deuxième consigne (C2) et une température courante du premier fluide caloporteur, comprenant
- un calcul d'un troisième écart entre la deuxième consigne (C2) de température du premier fluide caloporteur et une température courante du premier fluide caloporteur, puis
- une mise en oeuvre d'un régulateur de type proportionnel, intégral, dérivé déterminant une consigne de puissance (P2) de l'élément chauffant électrique annulant le troisième écart.

7. Système (1) de gestion thermique comprenant des éléments (1, 2, 10, 11, 12, 13, 14, 15, 16, 21, 80, 81, 82, 83, 110, 111, 112, 113, 114, 121, 811, 812, 813, 814) matériels et/ou logiciels mettant en oeuvre le procédé selon l'une des revendications 1 à 6.

8. Système (1) de gestion thermique selon la revendication précédente, **caractérisé en ce que** l'élément de chauffage électrique (13) est une résistance en céramique dite à coefficient de température positif.

9. Véhicule automobile (100) équipé d'un système thermique (1) selon l'une des revendications 7 ou 8.
